# EUROPEAN PATENT SPECIFICATION

(11) **EP 2 813 010 B1**
(45) Date of publication and mention of the grant of the patent: **13.01.2016**
(21) Application number: 12702283.8
(22) Date of filing: 07.02.2012
(51) Int. Cl.: H04B 10/00, H04B 10/2575

(54) **PHOTONIC RF GENERATOR**
PHOTONISCHER HF-GENERATOR
GÉNÉRATEUR DE RF PHOTONIQUE

(43) Date of publication of application: 17.12.2014
(73) Proprietor: Telefonaktiebolaget L M Ericsson (publ), 164 83 Stockholm (SE)
(72) Inventor: GHELFI, Paolo, I-56100 Pisa (IT); SCOTTI, Filippo, I-56100 Pisa (IT); LAGHEZZA,Francesco, I-56100 Pisa (IT); BOGONI, Antonella, I-56127 Pisa (IT)
(74) Representative: Alder, Ettie-Ann
(86) International application number: PCT/EP2012/052015
(87) International publication number: WO 2013/117216

(56) References cited:
- Z. LI; W. LI; H. CHI; X. ZHANG; J. YAO: "Photonic generation of phase-coded microwave signal with large frequency tunability", IEEE PHOTON. TECHNOL. LETT., vol. 23, no. 11, June 2011 (2011-06), pages 712-714, XP11322715, cited in the application
- P. GHELFI; F. SCOTTI; A. T. NGUYEN; G. SERAFINO; A. BOGONI: "Novel Architecture for a Photonics-Assisted Radar Transceiver based on a Single Mode-Locking Laser", IEEE PHOTON. TECHNOL. LETT., vol. 23, no. 10, February 2011 (2011-02), pages 639-641, XP11354890, cited in the application
- PETER J DELFYETT ET AL: "Advanced Ultrafast Technologies Based on Optical Frequency Combs", IEEE JOURNAL OF SELECTED TOPICS IN QUANTUM ELECTRONICS, IEEE SERVICE CENTER, PISCATAWAY, NJ, US, vol. 18, no. 1, 1 January 2012 (2012-01-01), pages 258-274, XP011398900, ISSN: 1077-260X, DOI: 10.1109/JSTQE.2011.2114874
- JIANPING YAO: "Microwave Photonics", JOURNAL OF LIGHTWAVE TECHNOLOGY, IEEE SERVICE CENTER, NEW YORK, NY, US, vol. 26, no. 3, 1 February 2009 (2009-02-01), pages 314-335, XP011251715, ISSN: 0733-8724

## Description

### Field

The present invention relates to RF signal generators, to transmitters having such RF generators, and corresponding methods of using such RF generators.

### Background

The capabilities of wireless networks have noticeably grown in the last decade, opening up new perspectives to telecommunications with the introduction of new concepts as personal communication, multimedia communication, and ubiquitous communication, which have changed our way of communicating, interacting, and living. Recently the mm-wave technology envisages the possibility of exchanging large amount of data at many Gb/s, at least over short ranges, exploiting radio broad-band multi-carrier communication systems that can provide high-speed transmission data (in the order of Gbps), and that can operate in "complicated" scenarios as in urban areas where conglomerates of buildings induce the presence of strong multipath. The use of multicarrier wideband signals reduces the distorting effects due to multipath propagation. Multi-carrier transmission techniques, such as frequency-hopping or channel-sensing, are able to avoid the use of the deep fading spectrum components offering the opportunity to make an adaptive modulation as a function of signal to noise ratio of the connection of each subcarrier. Also, if the broadband multicarrier transmission is done on millimeter band, the strong attenuation due to atmospheric absorption enables the system to limit interference and any other communication systems. Obviously this is the case of short-range communications for in-door systems. These techniques also offer the possibility to encrypt the communications for increased security of information. However, multicarrier systems require high stability and low phase noise sub-carriers, and this is one of the most critical aspects of implementing especially in the millimetre wave range. In addition, the purely electronic radio frequency (RF)-**generation architectures have different limitations at high**-frequency (electromagnetic interference, distortion and high phase noise), **due to up-**conversion frequency processes.

Appropriate optoelectronic architectures can overcome the limitations of a purely electronic RF generation and generate high-frequency signals with low distortion and excellent spectral purity exploiting the intrinsic phase stability of suitable lasers. In addition, the RF generator in the optical domain offers inherently more flexible solutions that facilitate the realization of reconfigurable multi-carrier transmitters for software defined radio (SDR) applications.

One advantage of SDR technology is that it is possible to exploit the same transceiver hardware with different standards (UMTS, GSM, LTE, WiMAX, satellite transmissions, etc ...), programmed via software. It 'important to note that, currently, all-electric technology does not allow fully the concept of SDR for each transmission frequency, due to the limitations of RF signal generation and analog bandwidth of the analog-to-digital converter (ADC) (around 2-3 GHz) which require one or more stages of up- and down-conversion.

Therefore, an RF generation system obtained by the introduction of photonics technology helps achieve the objectives of "flexibility" because it can extend its functionality (such as adding or updating new services in mobile terminals through software configuration), and "reconfigurability" allowing the system to be reprogrammed to extend the capabilities of the terminal without any replacement of the hardware, so that a multitude of communication standards can be managed from a single transceiver.

In the last few years, solutions based on photonic solutions have been proposed for generating phase-stable radiofrequency (RF) signals avoiding the up-conversion in noisy mixers at the radio transmitter. In fact the heterodyne detection of two continuous-wave (CW) lasers in a photodiode generates a sinusoidal signal at their frequency difference, which can be used as the RF carrier. If one of the lasers is also modulated, its modulation shape is transferred to the beating signal directly at RF. When the two beating CW lasers are phase-locked to each other, the generated RF signal is particularly stable. This is the case when the CW lasers are selected from the modes of a mode-locking laser (MLL) by means of optical filtering. The intrinsic phase-locking condition of the MLL ensures an extremely low phase noise of the generated RF signal, in particular if the MLL is driven in regenerative configuration working as an optical clock. Moreover, the possibility of selecting laser modes with variable wavelength detuning allows the flexible production of RF carriers with tunable frequency, potentially generating any multiple frequency of the MLL repetition rate (limited only by the bandwidth of the exploited photodiode). Such amplitude modulation is known from P. Ghelfi, F. Scotti, A. T. Nguyen, G. Serafino, A. Bogoni, "Novel Architecture for a Photonics-Assisted Radar Transceiver based on a Single Mode-Locking Laser", IEEE Photon. Technol. Lett., vol. 23, no. 10, pp.639-641, Feb. 2011.

In Z. Li, W. Li, H. Chi, X. Zhang, J. Yao,"Photonic generation of phase-coded microwave signal with large frequency tunability", IEEE Photon. Technol. Lett., vol. 23, no. 11, pp. 712-714, June 2011, (hereinafter Li), is shown a similar heterodyne detection and an MZM to obtain two sidebands to provide the two optical carriers at different frequencies. Phase modulation of one sideband is provided by a fiber Sagnac interferometer.

### Summary

An object of the invention is to provide improved apparatus or methods. According to a first aspect there is provided an RF signal generator having an optical part for outputting two or more optical carrier signals separated in optical frequency by a frequency difference, and a modulator arranged to modulate the two or more optical carrier signals with an intermediate frequency to generate sideband signals. The modulator is also arranged to apply a phase modulation to one or more of the sideband signals or the optical carrier signals, without applying the phase modulation to others of the sideband signals or optical carrier signal. The modulator has integrated optical paths for both the phase modulated signals and for the others of the signals without corresponding phase modulation. A detector part is arranged to combine at least one of the phase modulated signals with at least one of the other signals without corresponding phase modulation, to output an RF signal having a frequency corresponding to a difference in optical frequencies of these signals, and having the phase modulation.

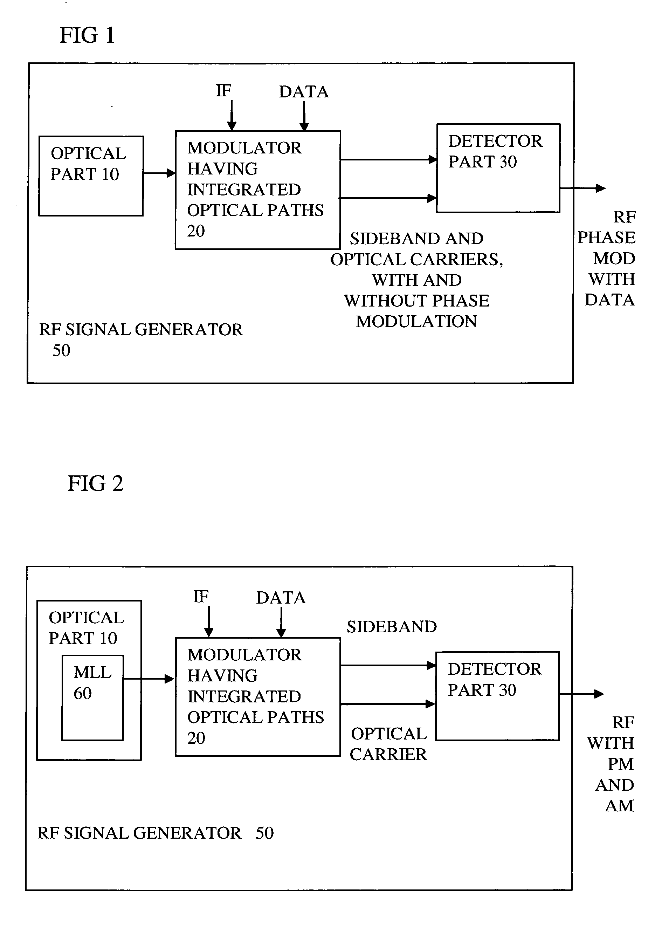

By having integrated optical paths for both the phase modulated signals and the others of the signals, the relative phase of these optical paths can be more stable than the known arrangement using a fiber sagnac interferometer with an optical isolator. Thus unwanted relative phase differences between the paths are not introduced and less phase instability appears in the subsequent RF signal, see fig 1 for example. This improved phase stability is notable for enabling use in advanced radio communications. The optical isolator is one feature of the known fiber sagnac arrangement which makes it impractical to simply integrate the known arrangement, so avoiding the need for an optical isolator helps enable the use of the integrated optical paths.

Any additional features can be added to these aspects, or disclaimed from them, and some are described in more detail below. One such additional feature is the modulator being arranged to apply the phase modulation to sideband signals only, or to optical carrier signals only, and the detector part being arranged such that the combined signals comprise at least one of the sideband signals and at least one of the optical carrier signals. Compared to Li which uses two sideband signals and suppresses the carrier, this combination of sideband and carrier can be simpler, and easier to integrate, see figure 2 for example. This avoids the use of counterpropagating signals, which can reduce the sensitivity to reflections and can therefore lead to better performance. Moreover it also avoids the use of isolators, which are impractical to integrate, and therefore also enables the integration of the modulator.

Another such additional feature is the optical part comprising a mode locked laser. This is a convenient way of providing such optical carriers at different frequencies and phase locked together, see fig 2 for example.

Another such additional feature is the modulator also being arranged to provide an amplitude modulation so that the RF signal is amplitude and phase coded, see fig 2 for example

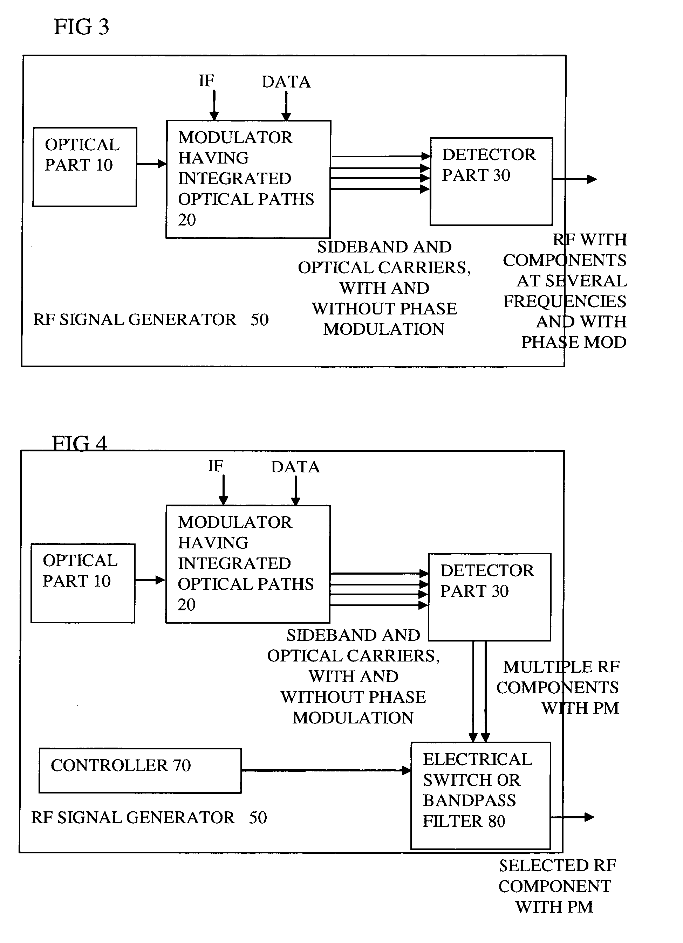

Another such additional feature is the detector part being arranged to make multiple combinations of phase modulated and other signals at different frequencies so that the RF signal has components at multiple frequencies. This can help with some applications, see fig 3 for example.

Another such additional feature is the RF signal generator having an electrical filter controllable in use for selecting which of the components are output. This can help make the device more adaptable, see fig 4 for example.

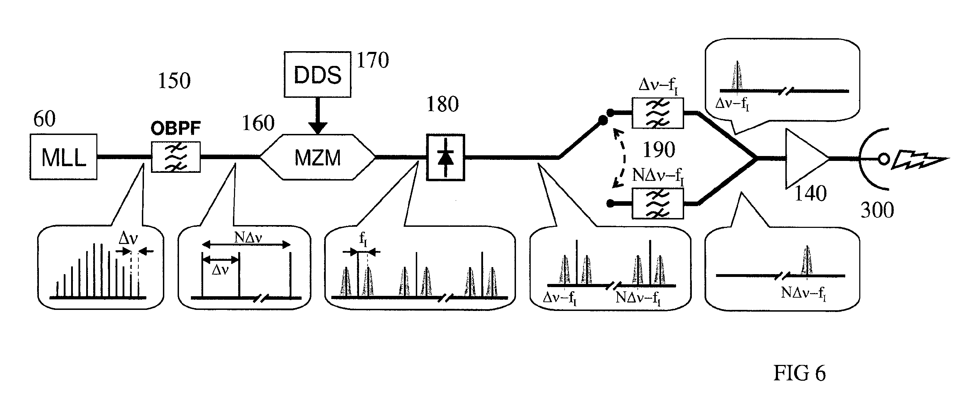

Another such additional feature is the modulation part having a Mach Zehnder modulator and a direct digital synthesizer part coupled to drive the Mach Zehnder modulator. See fig 6 for example. Such devices can be integrated in practice.

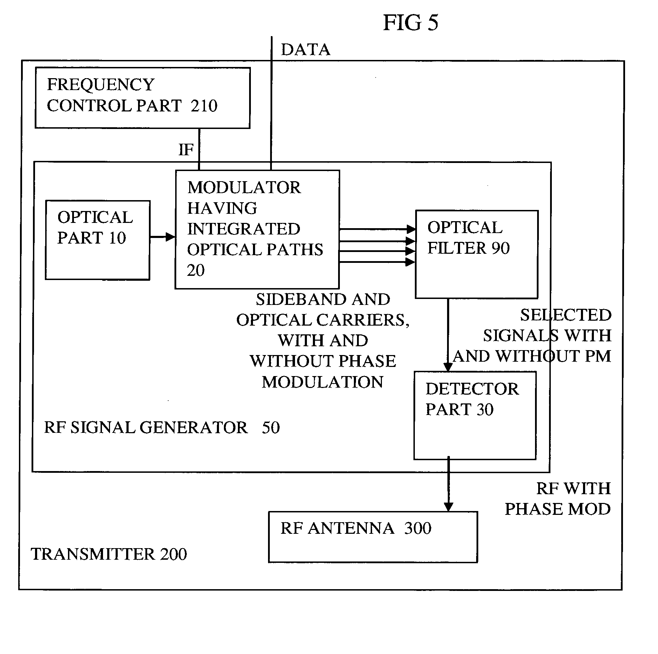

Another such additional feature is RF signal generator having an optical filter for selecting which of the signals are fed to the detector part. See fig 5 or 6 for example. Again this can make the device more adaptable.

Another such additional feature is the modulator comprising an IQ modulator having two branches, and having a phase modulator on one of the branches.

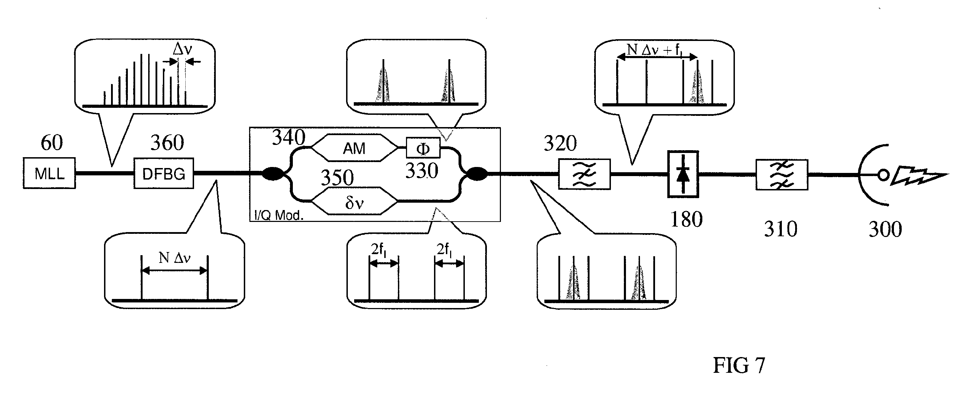

See fig 7 for example. Again this type of modulator can be integrated more easily.

Another such additional feature is the modulator being arranged so that the intermediate frequency is controllable in use. See fig 5, 6 or 7 for example. This can help make the device more adaptable in use.

Another aspect of the invention provides a transmitter having an RF signal generator with any combination of features as set out above, arranged to use a data signal to control the phase modulation of the RF signal generator, and having a frequency control part coupled to the RF signal generator for controlling a frequency of the RF signal output of the RF signal generator, and an antenna coupled for transmitting the RF signal output of the RF signal generator. See fig 5 for example.

Another aspect of the invention provides a method of using an RF signal generator as set out above, to output an RF signal.

Any of the additional features can be combined together and combined with any of the aspects. Other effects and consequences will be apparent to those skilled in the art, especially over compared to other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
Fig. 1 shows a schematic view of an RF generator according to an embodiment,
Figs. 2-4 show schematic views of an RF generator according to other embodiments, and
Figs 5-7 show schematic views of transmitters according to embodiments having RF generators.

### Detailed Description:

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

### Definitions:

Where the term "comprising" is used in the present description and claims, it does not exclude other elements or steps and should not be interpreted as being restricted to the means listed thereafter. Where an indefinite or definite article is used when referring to a singular noun e.g. "a" or "an", "the", this includes a plural of that noun unless something else is specifically stated.

References to software can encompass any type of programs in any language executable directly or indirectly on processing hardware.

References to circuitry can encompass processors, hardware, processing hardware or any kind of logic or analog circuitry, integrated to any degree, and not limited to general purpose processors, digital signal processors, ASICs, FPGAs, discrete components or logic and so on. References to a processor are intended to encompass implementations using multiple processors which may be integrated together, or co-located in the same node or distributed at different locations for example.

References to modulators are intended to encompass any kind of modulator suitable for modulating optical carrier signals, not limited to the types described.

References to integrated optical paths are intended to encompass photonic integrated circuits such as those made from semiconductors or polymers or other materials, with waveguides formed by photolithography or other techniques, and not limited to particular materials or degree of integration, so as to be suitable to avoid the phase instability introduced by optical fibers.

### Abbreviations:

- RF: *Radio Frequency*
- SDR: *Software Defined Radio*
- ASE: *Amplified Spontaneous Emission*
- UMTS: *Universal Mobile Telecommunications System*
- GSM: *Global System for Mobile Communications*
- WiMAX: *Worldwide Interoperability for Microwave Access)*
- ADC: *Analog-to-Digital Converter*
- CW: *Continuous wave*
- MLL: *Mode-Locking Laser*
- DDS: *Direct Digital Synthesizer*
- MZM: *Mach Zenhder Modulator*
- IQ: *In-phase*/*Quadrature*
- SSA: *Signal Source Analyzer*
- AM: *Amplitude Modulation*
- FBG: *Fiber Bragg Grating*
- AF: *Autocorrelation Function*
- OBPF: *Optical Band Pass Filter*
- DFBG: *Differential Fiber Bragg Grating*

### Introduction

By way of introduction to the embodiments, issues arising in the conventional arrangements will be discussed first. A lot of effort has been spent in the photonic generation of RF carriers, but little has been published on optically introducing software-defined amplitude or phase coding in the radio signal. This would be useful since radio communications require different phase/amplitude modulation formats for optimizing the system performance. Thus, the capability of optically introducing a generic phase modulation could help to overcome the modulation electronic bandwidth limitations avoiding the use of expensive high frequency components, offering more flexibility and reconfigurability also for the modulation choice.

To generate optically an amplitude- and/or phase-modulated RF signal at a specific carrier frequency f_{c}, it is necessary to heterodyne two stable CW lasers with a frequency detuning f_{c}, one of which must be amplitude/phase modulated. The heterodyne detection involves combining a phase modulated sideband with a non-phase-modulated sideband, so that the phase modulation is not cancelled out. One practical problem in this procedure is to process the two lasers independently without affecting their reciprocal phase stability. On the other hand, if both the lasers were modulated by a baseband signal in the same setup, the phase information would be lost after the heterodyning. The Sagnac interferometer used in Li separates and blocks one of the sidebands with an optical wavelength filter and optical isolator. But the optical isolator makes it impractical to integrate this, and the fiber part of the Sagnac interferometer means there are separate fiber paths for the two sidebands which will introduce some relative phase instability between the two carriers which will appear as phase noise in the RF output.

### Figure 1, RF generator according to a first embodiment

Figure 1 shows a schematic view of an embodiment of an RF generator 50. The generator has an optical part 10 for outputting two or more optical carrier signals separated in optical frequency by a frequency difference, to a modulator 20 arranged to modulate the two or more optical carrier signals with an intermediate frequency IF to generate sideband signals. The modulator can apply a phase modulation to one or more of the sideband signals or the optical carrier signals, without applying the phase modulation to others of the sideband signals or optical carrier signals. Notably the modulator has integrated optical paths for both the phase modulated signals and for the others of the signals without corresponding phase modulation. A detector part 30 is arranged to combine at least one of the phase modulated signals with at least one of the other signals without corresponding phase modulation. The output is an RF signal having a frequency corresponding to a difference in optical frequencies of these signals, and having the phase modulation.

This can enable optical generation of software-definable phase-modulated RF pulses with flexible carrier frequency in some cases at multiple carrier frequencies simultaneously, and with a phase stability suitable for advanced radio communications. The optical part can have two laser beams (for example by selecting from the modes of an MLL) which can be amplitude modulated by a signal at intermediate frequency fₗ. In this way after the detector, such as a photodiode, several components would be present. Those at frequency f_{c}±fₗ, i.e. the heterodyne between the original laser modes and the generated sidebands, would bring both the desired amplitude and phase modulation. Therefore an RF filter after the detector and centered at f_{c}±fₗ can be used to select the desired RF signal.

This scheme can be easily extended to generate flexible carrier radio signals if more than two CW lasers (e.g., provided by a MLL) are modulated by the signal at fₗ and heterodyned in a photodiode with sufficient bandwidth. In this case, amplitude/phase-modulated RF signals are generated at ±fₗ from any beating frequency between the considered lasers. Then a set of RF filters can be used to select the signal at the desired carrier frequency.

### Figures 2 to 4, further embodiments of RF generators

Figure 2 shows a schematic view of an embodiment of an RF generator similar to that of figure 1. In this case, the optical part is in the form of an MLL 60, and the modulator is arranged to output a sideband and on of the optical carriers. The MLL is a particularly effective way of generating carriers with good phase stability. By having the modulator output a sideband and at least one of the optical carriers to the detector, this helps enable the modulator to avoid needing to use counterpropagating signals, as in Li. Avoiding these can reduce the sensitivity to reflections and can therefore lead to better performance. Moreover it also avoids the use of isolators which are impractical to integrate.

Figure 3 shows a schematic view of an embodiment of an RF generator similar to that of figure 1. In this case, the detector part is arranged to output RF with components at several RF frequencies and having phase modulation. This is useful for different applications, and can enable easier adaptation to different standards either at manufacture or in use.

Figure 4 shows a schematic view of an embodiment of an RF generator similar to that of figure 3. In this case, an electrical switch or bandpass filter 80 is provided for selecting which of the RF components is output. A controller 70 can be provided for controlling the selection in use, using conventional circuitry or software. Any of these embodiments can have amplitude as well as phase modulation by the modulator.

### Figure 5, schematic view of transmitter having an RF generator

Figure 5 shows an embodiment of a transmitter 200 having an RF signal generator 50 similar to that of figure 4. A frequency control part 210 provides the IF input to the modulator. The output of the detector part is fed to RF antenna 300.

### Fig. 6. Transmitter with RF generator based on MZM.

Figure 6 shows an embodiment of a transmitter. The optical part is in the form of an MLL 60 which feeds an OBPF 150 for selecting which wavelengths and thus what frequency separation is involved. The modulator is in the form of an MZM 160 driven by a DDS 170. The operation of modulating the RF carriers with a signal at intermediate frequency must not affect the phase stability of the unmodulated carriers. An interesting solution is generating the modulating signal with a low-frequency high-quality direct digital synthesizer (DDS), which also enables a change in the modulating waveform and the intermediate frequency, thus realizing a software-defined radio signal. The DDS can receive or generate an IF signal and can receive a data signal for transmission. The detector part is in the form of a photodetector 180. An array of switchable electrical filters 190 is provided after the photodetector. The selected RF component is output to an RF amplifier 140 which feeds antenna 300.

In this scheme, amplitude and phase modulation are applied by means of a single electrical signal applied as electrical modulating signal of an amplitude modulator (in this case a Mach Zehnder modulator (MZM)). As shown in figure 6, the spectrum going into the MZM has lines at the carrier frequencies. At the output of the MZM the lines have sidebands which are modulated, shown by the shaded cones around each sideband. After the photodetector, the spectrum has components at frequencies corresponding to the differences in frequency between the optical components. Where the difference is between an unmodulated carrier and a modulated sideband, then the modulation appears in the RF signal component. After RF filtering, the spectrum shows that one of these modulated sidebands is selected for output to the antenna.

### Operational example using MZM:

This scheme based on the MZM has been implemented in a test example using a laser source in the form of a regenerative fiber MLL with a repetition rate of 10000MHz. An optical band-pass filter (OBPF) with a bandwidth of 0.4nm was used to select five adjacent modes, which were launched into a MZM biased at its quadrature point. The five modes were modulated by a 16-bit 400Msample/s DDS. In this case the modulating signal was a pulsed linearly chirped frequency with a bandwidth of 25MHz and centered around fₗ equal to 100MHz or 184MHz, as explained in the following. The frequency was swept over a duration of 5µs, followed by 10µs of OV-DC signal in order to generate 5µs radar pulses over a period of 15µs. The modulation produced sidebands around each laser modes, and when the optical signal thus generated was detected by a 50GHz-bandwidth photodiode, all the beatings between modes and sidebands were produced. Two RF filters with a bandwidth of 40MHz and centered at 9900MHz and at 39816MHz were then used to alternately select the phase-modulated signal when fₗ is respectively equal to 100MHz and 184MHz (in order to match the center frequency of the filters).

At first, the DDS was set to generate a linear chirp around 100MHz, and the RF filter centered at 9900MHz was used. The signal generated by the DDS is effectively upconverted to 9900MHz, producing a linearly chirped pulse across 25MHz, and so is capable of effectively upconverting amplitude- and phase-modulated signals. Moreover, the pulsed amplitude showed an extinction ratio of about 40dB.

By setting the DDS to generate a chirped signal centered at 184MHz and replacing the RF filter, a phase-modulated pulsed signal at 39816MHz could be produced. The phase stability of the carrier at 39816MHz was not affected by the shifting process, confirming that the proposed scheme is suitable for generating high-frequency signals for advanced radio systems.

### Fig. 7. Transmitter for generating multiple carrier amplitude/phase modulated RF signals based on IQ modulator.

Figure 7 shows a similar arrangement to that of figure 6. In this case, the MLL 60 feeds an optical filter in the form of a DFBG 360. The modulator is in the form of an I/Q modulator having two branches. In a first branch there is an amplitude modulator AM 340 in series with a phase modulator 330. In the other branch is an IF modulator 350. An optical filter 320 is provided before the detector 180. An RF bandpass filter 310 is provided before the antenna 300. As can be seen from the spectral diagrams shown in figure 7, at the output of the DFBG, just two lines are present, selected to give a desired frequency separation. These two carriers are given a phase and amplitude modulation by the first branch of the modulator. Sidebands which are not given such phase and amplitude modulation are produced by the second branch of the modulator. These are added to give the spectrum shown at the input of the optical filter, which has modulated carriers and unmodulated sidebands, in contrast to the case of figure 6 which had modulated sidebands and unmodulated carriers.

One of the modulated carriers is taken out by the optical filter, so that the photodetector produces a clear output based on a difference frequency between a carrier and a sideband, an maintains the amplitude and phase modulation in the electrical domain.

As both amplitude and phase modulations are being applied to the RF signals, it is convenient to have the two modulations are made independently using such an IQ modulator. A scheme for applying an amplitude modulation only has been implemented before, but the use of all the control ports of the IQ modulator allows also for both an amplitude and phase modulation as explained in the following.

In this case the signal is split along the two different paths of an optical I/Q modulator. In the first path both the modes are amplitude and phase modulated. The amplitude modulation is applied through the AM port, while the phase modulation is carried out by means of a signal Φ(t) applied to the bias voltage which controls the reciprocal phase shift between the two branches (Bias P). In the second path, the two modes are both modulated to generate new slightly shifted components by a carrier-suppressed amplitude modulation driven by a low-phase-noise sinusoidal signal at frequency fₗ, generating two ±1 order sidebands. The resulting signal at the output of the modulator shows six spectral components. Between them, two pairs of components are at a frequency difference of NΔν+ fₗ (and analogously NΔν- fₗ), and one of the components in each pair is phase-modulated by Φ(t). If these components were heterodyned in a photodiode, the two pairs would both generate a RF signal at a frequency carrier of NΔν+ fₗ (or at NΔν- fₗ), but one RF signal would be phase modulated by Φ(t) while the other would be modulated by -Φ(t), thus they would interfere with each other. So before detecting the components in the photodiode, one of the component pairs must be suppressed. This can be done by filtering out either one of the phase-modulated modes from the MLL, or one of the fₗ -shifted new components. After the photodiode, an RF filter at NΔν+ fₗ (or at NΔν- fₗ) can select the desired phase-modulated radar pulse.

Even in this case the scheme can be easily extended to generate flexible carrier radio signals if more than two CW lasers (e.g., provided by a MLL) are modulated by the IQ modulator. Both of the schemes of figs 6 and 7 can be implemented exploiting commercially available devices already used for different purposes in optical communication.

The modulation bandwidth in the MZM-based scheme is related to the device bandwidth as for the amplitude modulation in the case of the IQ modulator (up to 40 GHz for devices available on the market). The phase modulation bandwidth in this last case depends on the bias control port bandwidth that is limited to few MHz for commercial devices but that can be designed to have a higher bandwidth. For both the proposed schemes the amplitude/phase modulation operation does not affect the stability of the original carrier.

### Operational examples using I/Q modulator

In one example the exploited laser source was a regenerative fiber MLL with a repetition rate of 9954MHz and a central wavelength of 1554.5nm. A dual fiber Bragg grating (DFBG) was used to select two non-adjacent modes at a detuning of 19908MHz, with a suppression of 25dB of the undesired adjacent modes. The two selected modes were then launched into the optical I/Q modulator. Along one of the arms of the I/Q modulator an on/off amplitude modulation (AM) was applied to the input laser modes to form the radio pulses. A waveform generator modulated both the laser modes with a rectangular pulse with a duration of 1µs over a period of 3µs, and a modulation depth close to 1. Moreover, a phase modulation was added to the laser modes to exploit the Bias P port driven by a low-frequency and low-noise DDS. In the second arm of the I/Q modulator a carrier suppressed modulation was obtained by setting the relative MZM to the minimum transmission point. The modulation was driven by a waveform synthesizer producing a sinusoidal signal at fₗ=5084MHz with an amplitude of 0.7V_{π} thus splitting the two modes into four new spectral components at +/-fₗ from the original modes.

In order to suppress one of the two original carriers, a fiber Bragg grating (FBG) with a bandwidth of 6GHz was used as a notch filter. The resulting signal was sent to a 50GHz-bandwidth photodiode. A RF filter centered at 25000MHz with a bandwidth of 25MHz was used to select the beating of interest at 24992MHz between the non-suppressed amplitude- and phase-modulated original laser mode and the laser line obtained by shifting the other original mode of fₗ. Of course other values than those described can be chosen.

### Concluding Remarks

The proposed embodiments can enable optical generation of arbitrary amplitude/phase-modulated RF pulses with some or all of the following advantages, compared with the current electronic solutions.

Carrier frequencies can extend over a wide range up to 100 GHz allowing the development of radio systems with improved functionalities.

High phase stability can be achieved independently of the carrier frequency.

The carrier frequency can be set flexibly.

In some embodiments the use of a low-frequency high-quality DDS helps permit the generation of software-defined modulating signals which are transferred to the modes of a MLL, without affecting their reciprocal phase stability.

Frequency agility can be implemented on close or far frequencies (as in frequency hopping or in multiprotocol radio systems, respectively).

The **carriers can be generated simultaneously (multicarrier generation)** or alternately, or even changed continuously. The modulating signal can also be changed meanwhile, implementing a waveform diversity technique.

At least some of the embodiments described can generate software-defined amplitude/phase-coded RF pulses with superior stability, even at very high carrier frequency, and can do so using only a single commercial device with potential for wideband modulation. It can therefore help enable a new generation of advanced radio systems with reduced complexity and cost.

Other variations and embodiments can be envisaged within the claims.

## Claims

1. An RF signal generator (50) having:
an optical part (10) for outputting two or more optical carrier signals separated in optical frequency by a frequency difference,
a modulator (20) arranged to modulate the two or more optical carrier signals with an intermediate frequency to generate sideband signals, the modulator also being arranged to apply a phase modulation to one or more of the sideband signals or the optical carrier signals, without applying the phase modulation to others of the sideband signals or optical carrier signals, the modulator having integrated optical paths for both the phase modulated signals and for the others of the signals without corresponding phase modulation, and
a detector part (30) arranged to combine at least one of the phase modulated signals with at least one of the other signals without corresponding phase modulation, to output an RF signal having a frequency corresponding to a difference in optical frequencies of these signals, and having the phase modulation.

2. The RF signal generator of claim 1, the modulator (20) being arranged to apply the phase modulation to sideband signals only, or to optical carrier signals only, and the detector part being arranged such that the combined signals comprise at least one of the sideband signals and at least one of the optical carrier signals.

3. The RF signal generator of claim 1 or 2, the optical part comprising a mode locked laser (60).

4. The RF signal generator of any preceding claim, the modulator also being arranged to provide an amplitude modulation so that the RF signal is amplitude and phase coded.

5. The RF signal generator of any preceding claim, the detector part being arranged to make multiple combinations of phase modulated and other signals at different frequencies so that the RF signal has components at multiple frequencies.

6. The RF signal generator of claim 5 and having an electrical filter (80) controllable in use for selecting which of the components are output.

7. The RF signal generator of any preceding claim, the modulation part having a Mach Zehnder modulator (160) and a direct digital synthesizer part (170) coupled to drive the Mach Zehnder modulator.

8. The RF signal generator of claim 7 and having an optical filter (90) for selecting which of the signals are fed to the detector part.

9. The RF signal generator of any preceding claim, the modulator comprising an IQ modulator having two branches, and having a phase modulator (330) on one of the branches.

10. The RF signal generator of any preceding claim, the modulator being arranged so that the intermediate frequency is controllable in use.

11. A transmitter (200) having an RF signal generator as set out in any preceding claim, arranged to use a data signal to control the phase modulation of the RF signal generator, a frequency control part (210) coupled to the RF signal generator for controlling a frequency of the RF signal output of the RF signal generator, and an antenna (300) coupled for transmitting the RF signal output of the RF signal generator.

12. A method of using an RF signal generator according to any of claims 1 to 10, to output an RF signal.

## Patentansprüche

1. HF-Signalgenerator (50), aufweisend:
einen optischen Teil (10) zum Ausgeben zweier oder mehrerer optischer Trägersignale, die in optischer Frequenz um eine Frequenzdifferenz getrennt sind,
einen Modulator (20), der so ausgelegt ist, dass er die zwei oder die mehreren optischen Trägersignale mit einer Zwischenfrequenz moduliert, um Seitenbandsignale zu erzeugen, wobei der Modulator außerdem so ausgelegt ist, dass er eine Phasenmodulation auf ein oder mehrere der Seitenbandsignale oder der optischen Trägersignale anwendet, ohne die Phasenmodulation auf andere der Seitenbandsignale oder optischen Trägersignale anzuwenden, und der Modulator sowohl integrierte optische Pfade für die phasenmodulierten Signale als auch für die anderen der Signale ohne entsprechende Phasenmodulation aufweist, und
einen Detektorteil (30), der so ausgelegt ist, dass er mindestens eines der phasenmodulierten Signale mit mindestens einem der anderen Signale ohne entsprechende Phasenmodulation verknüpft, um ein HF-Signal mit einer Frequenz, die einer Differenz in optischen Frequenzen dieser Signale entspricht, und mit der Phasenmodulation auszugeben.

2. HF-Signalgenerator nach Anspruch 1, wobei der Modulator (20) so ausgelegt ist, dass er die Phasenmodulation nur auf Seitenbandsignale oder nur auf optische Trägersignale anwendet, und der Detektorteil derart ausgelegt ist, dass die verknüpften Signale mindestens eines der Seitenbandsignale und mindestens eines der optischen Trägersignale umfassen.

3. HF-Signalgenerator nach Anspruch 1 oder 2, wobei der optische Teil einen modengekoppelten Laser (60) umfasst.

4. HF-Signalgenerator nach einem der vorhergehenden Ansprüche, wobei der Modulator außerdem so ausgelegt ist, dass er eine Amplitudenmodulation bereitstellt, so dass das HF-Signal amplituden- und phasencodiert wird.

5. HF-Signalgenerator nach einem der vorhergehenden Ansprüche, wobei der Detektorteil so ausgelegt ist, dass er mehrere Kombinationen von phasenmodulierten oder anderen Signalen bei verschiedenen Frequenzen durchführt, so dass das HF-Signal Komponenten bei mehreren Frequenzen aufweist.

6. HF-Signalgenerator nach Anspruch 5 und aufweisend ein elektrisches Filter (80), das in Verwendung gesteuert werden kann, um auszuwählen, welche der Komponenten ausgeben werden.

7. HF-Signalgenerator nach einem der vorhergehenden Ansprüche, wobei der Modulationsteil einen Mach-Zehnder-Modulator (160) und einen direkten digitalen Synthesizerteil (170) aufweist, der zum Ansteuern des Mach-Zehnder-Modulators gekoppelt ist.

8. HF-Signalgenerator nach Anspruch 7 und aufweisend ein optisches Filter (90) zum Auswählen, welche der Signale in den Detektorteil eingespeist werden.

9. HF-Signalgenerator nach einem der vorhergehenden Ansprüche, wobei der Modulator einen IQ-Modulator mit zwei Zweigen umfasst und einen Phasenmodulator (330) in einem der Zweige aufweist.

10. HF-Signalgenerator nach einem der vorhergehenden Ansprüche, wobei der Modulator so ausgelegt ist, dass in Verwendung die Zwischenfrequenz geregelt werden kann.

11. Sender (200), aufweisend einen HF-Signalgenerator nach einem der vorhergehenden Ansprüche, der so ausgelegt ist, dass er ein Datensignal verwendet, um die Phasenmodulation des HF-Signalgenerators zu steuern, einen Frequenzregelteil (210), der mit dem HF-Signalgenerator zum Regeln einer Frequenz der HF-Signalausgabe des HF-Signalgenerators gekoppelt ist, und eine Antenne (300), die zum Senden der HF-Signalausgabe des HF-Signalgenerators gekoppelt ist.

12. Verfahren zur Verwendung eines HF-Signalgenerators nach einem der Ansprüche 1 bis 10 zum Ausgeben eines HF-Signals.

## Revendications

1. Générateur de signal RF (50) comprenant :
une partie optique (10) pour délivrer deux signaux porteurs optiques ou plus séparés en fréquence optique par une différence de fréquence,
un modulateur (20) agencé pour moduler les deux signaux porteurs optiques ou plus avec une fréquence intermédiaire pour générer des signaux de bande latérale, le modulateur étant également agencé pour appliquer une modulation de phase à un ou plusieurs des signaux de bande latérale ou aux signaux porteurs optiques, sans appliquer la modulation de phase à d'autres des signaux de bande latérale ou des signaux porteurs optiques, le modulateur comprenant des voies optiques intégrées pour les signaux à modulation de phase et pour les autres signaux sans modulation de phase correspondante, et
une partie de détecteur (30) agencée pour combiner au moins l'un des signaux à modulation de phase avec au moins l'un des autres signaux sans modulation de phase correspondante, pour délivrer un signal RF ayant une fréquence correspondant à une différence de fréquences optiques de ces signaux, et ayant la modulation de phase.

2. Générateur de signal RF selon la revendication 1, le modulateur (20) étant agencé pour appliquer la modulation de phase uniquement à des signaux de bande latérale, ou uniquement à des signaux porteurs optiques, et la partie de détecteur étant agencée de sorte que les signaux combinés comprennent au moins l'un des signaux de bande latérale et au moins l'un des signaux porteurs optiques.

3. Générateur de signal RF selon la revendication 1 ou 2, la partie optique comprenant un laser à verrouillage de mode (60).

4. Générateur de signal RF selon l'une quelconque des revendications précédentes, le modulateur étant également agencé pour fournir une modulation d'amplitude de sorte que le signal RF soit à codage d'amplitude et de phase.

5. Générateur de signal RF selon l'une quelconque des revendications précédentes, la partie de détecteur étant agencée pour effectuer de multiples combinaisons de signaux à modulation de phase et d'autres signaux à différentes fréquences de sorte que le signal RF comporte des composants à des fréquences multiples.

6. Générateur de signal RF selon la revendication 5, comprenant un filtre électrique (80) pouvant être commandé en utilisation pour sélectionner les composants qui sont délivrés.

7. Générateur de signal RF selon l'une quelconque des revendications précédentes, la partie de modulation comprenant un modulateur Mach Zehnder (160) et une partie de synthétiseur numérique direct (170) couplée pour entraîner le modulateur Mach Zehnder.

8. Générateur de signal RF selon la revendication 7, comprenant un filtre optique (90) pour sélectionner les signaux qui sont alimentés dans la partie de détecteur.

9. Générateur de signal RF selon l'une quelconque des revendications précédentes, le modulateur comprenant un modulateur IQ comportant deux branches, et comportant un modulateur de phase (330) sur l'une des branches.

10. Générateur de signal RF selon l'une quelconque des revendications précédentes, le modulateur étant agencé de sorte que la fréquence intermédiaire puisse être commandée en utilisation.

11. Emetteur (200) comprenant un générateur de signal RF selon l'une quelconque des revendications précédentes, agencé pour utiliser un signal de données pour commander la modulation de phase du générateur de signal RF, une partie de commande de fréquence (210) couplée au générateur de signal RF pour commander une fréquence de la sortie de signal RF du générateur de signal RF, et une antenne (300) couplée pour émettre la sortie de signal RF du générateur de signal RF.

12. Procédé d'utilisation d'un générateur de signal RF selon l'une quelconque des revendications 1 à 10, pour délivrer un signal RF.
